# EUROPEAN PATENT SPECIFICATION

(11) **EP 3 244 285 B1**
(45) Date of publication and mention of the grant of the patent: **30.06.2021**
(21) Application number: 16169039.1
(22) Date of filing: 10.05.2016
(51) Int. Cl.: G06F 3/01

(54) **PHYSIOLOGICALLY ADAPTIVE USER INTERFACE**
PHYSIOLOGISCH ANPASSUNGSFÄHIGE BENUTZERSCHNITTSTELLE
INTERFACE UTILISATEUR ADAPTATIVE PHYSIOLOGIQUEMENT

(43) Date of publication of application: 15.11.2017
(73) Proprietor: SAP SE, 69190 Walldorf (DE)
(72) Inventor: des Pommare, Jean-Nicolas, 69190 Walldorf (DE)
(74) Representative: Richardt Patentanwälte PartG mbB

(56) References cited:
- US-A- 5 886 683
- US-A- 6 102 870
- US-A1- 2015 261 387
- US-B1- 6 577 329
- US-B1- 6 873 314
- US-B1- 7 881 493
- None

## Description

### Technical Field

The present disclosure relates to a physiologically adaptive user interface. More particularly, the present disclosure relates to optimization of user interface using feedback information based on user physiology.

### Background

Human computer interaction is an important topic of computer science since decades. The increased power of graphical display units gives an opportunity to use full strengths of graphical representation of information in comparison with text based user interfaces of the eighties or even nineties of the twentieth century. In addition a lot of knowledge has been collected regarding physiological perception of presented to a human being in a form of a text or symbols. Despite the fact that a lot of theories have been developed in the field of the physiological perception of information a lot of unclear phenomena in this field still remain. For instance, humans tend to ignore/overlook spelling mistakes of particular kind in words, like wrong sequence of letters. Another open question whether an actual field of view when a gaze of human eyes is fixed at a particular word. There is no consensus in the scientific community regarding a number letters in a particular word that can be seen and processed by human brain. Some theories speculate that visibility of a letter in a word decreases with increase of its distance from a center of the visual field (foveal vision) which is fixed as usual at a center of the word. On contrary, some theories speculate that in addition to foveal word processing, a parafoveal and a peripheral information is extracted and used in the process of reading. Human perception of pictures is a separate topic of research. It has been established that sequences of saccades (i.e. gaze fixation points of human eyes) generated by human brain at physiological level are totally different when a human being is looking at a picture (purely graphical representation of information) in comparison with a situation when a human being is reading a text. Despite the fact a picture can carry more information than a text information formulated in a natural language, humans sometimes tend to read comments related to the picture first instead of first studying the picture. Despite very big volume of information related to physiological perception of the information almost no knowledge is available for cases when information is presented as a mixture of words and pictures (e.g. icons).

US 7 881 493 B1 discloses eyetracking techniques and analysis techniques. At least one interpretation of eyetracking data is received from an eye interpretation engine. A characteristic of an application is dynamically modified based on the interpretation of the eyetracking data. A portion of the application being viewed by a user may be determined. The determined portion may be modified in response to the interpretation of the eyetracking data for the user.

### Summary

Symbol, as understood here, is a graphical representation of information on a screen of an electronic system. The symbol can be a word, a combination of words, an icon, a pictogram, a combination of one or more icons and/or one or more pictograms and/or one or more word.

The present invention provides a solution to the above mentioned aspects according to the independent claims. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

According to one embodiment, the present invention relates a method for controlling an electronic system comprising a microprocessor, an eye tracker component, a display, and a memory. The memory comprises an executable code being executable by the microprocessor. The executable code when executed by the microprocessor causes the electronic system to perform the following: displaying a menu on a portion of a screen of the display, wherein at least one symbol being representation of information of the menu is displayed on the portion of the screen, the symbol being a single word, a combination of words, or an icon, each of the at least one symbol having its respective ranking, wherein when the ranking of the symbol is higher than an icon display threshold value it is displayed as its respective icon; registering using the eye tracker component saccades of user eyes of a user each having its starting and/or end gaze fixation point within the portion of the screen; and decreasing the icon display threshold value such that a number of the icons used for the displaying of the menu on the portion of the screen is increased when a number of the registered saccades exceeds a saccade number threshold value.

This embodiment can be advantageous because it is uses data based on human physiological perception of information as a feedback. Initial displaying of a menu using a lot of icons can be too complex for a user. Thus it might be optimal to substitute some of the words by their respective icons thought usage of the menu by the user. The feedback information is collected without prompting user to perform any additional actions. The next view of the menu using higher number of icons for presenting the menu information is used after a threshold number of saccades are registered.

According to another embodiment, the method further comprises iteratively repeating execution of the steps of: the displaying the menu on the portion of the screen of the display; the registering using the eye tracker component of saccades of the user eyes of the user each having its starting and/or end gaze fixation point within the portion of the screen; and the decreasing of the icon display threshold value such that a number of the icons used for displaying of the menu on the portion of the screen is increased when a number of the registered saccades in the current iteration exceeds a saccade number threshold value. The iterative repeating of execution of said steps is executed until the menu is fully displayed on the portion of the screen using the icons. A screen area used for displaying on the screen of at least of one of the icons is less than a screen area used for displaying on the screen of its respective word or word combination. A screen area used for the displaying of the menu on the portion of the screen in one of the iterations is bigger than a screen area used for the displaying of the menu on the portion of the screen in another one of the iterations executed after the one of the iterations.

This embodiment can be advantageous because it provides for iterative gradual increase of symbols represented in the displayed menu as their corresponding icons. Since the representation of information as icons might be more compact in comparison of representation of information using words, the area of the portion of the screen used for the displaying of the menu can be gradually decreased throughout the iterative repetitive execution of said steps.

According to one embodiment, the present invention relates a method for controlling an electronic system comprising a microprocessor, an eye tracker component, a display, and a memory. The memory comprises an executable code being executable by the microprocessor. The executable code when executed by the microprocessor causes the electronic system to perform the following: displaying a menu on a portion of a screen of the display, wherein at least one symbol being representation of information of the menu is displayed on the portion of the screen, the symbol being a single word, a combination of words, or an icon, each of the at least one symbol having its respective ranking, wherein when the ranking of the symbol is higher than an icon display threshold value it is displayed as its respective icon; registering using the eye tracker component saccades of user eyes of a user each having its starting and/or end gaze fixation point within the portion of the screen, decreasing the icon display threshold value such that a number of icons used for displaying the menu on the portion of the screen is increased when a moving average of a number of the registered saccades in the time series has reached its saturation value, wherein the moving average is calculated for a last elapsed time interval of a predefined duration in the time series. The registering using the eye tracker component saccades of the user eyes of the user each having its starting and/or end gaze fixation point within the portion of the screen comprises: starting a timer after registering the first saccade, and halting the timer between the consecutively registered saccades, if any, having only one of their respective starting or end gaze fixation points within the portion of the screen, wherein the registered saccades are registered as a time series of saccades and time in the time series is registered according to the timer.

This embodiment can be advantageous because it is uses data based on human physiological perception of information as a feedback. Initial displaying of a menu using a lot of icons can be too complex for a user. Thus it might be optimal to substitute some of the words by their respective icons thought usage of the menu by the user. The feedback information is collected without prompting user to perform any additional actions. The next view of the menu using higher number of icons for presenting the menu information is used after a moving average of the registered saccades has reached its saturation value.

According to another embodiment, the method of the last mentioned embodiment further comprises iteratively repeating execution of the steps of: the displaying the menu on the portion of the screen of the display; the registering using the eye tracker component of the saccades of the user eyes of the user each having its starting and/or end gaze fixation point within the portion of the screen; and the decreasing of the icon display threshold value such that a number of icons used for displaying the menu in the natural language on the portion of the screen is increased when a moving average of a number of the registered saccades in the time series has reached its saturation value in the current iteration, wherein in the current iteration the moving average is calculated for the last elapsed time interval of the predefined duration in the time series. The iterative repeating of execution of said steps is executed until the menu is fully displayed using the icons or the saturation value reached in the current iteration exceeds the saturation value reached in the previous iteration, wherein a screen area used for displaying on the screen of at least one of the icons is less than a screen area used for displaying on the screen of its respective word or word combination, wherein a screen area used for the displaying of the menu on the portion of the screen in one of the iterations is bigger than a screen area used for the displaying of the menu on the portion of the screen in another one of the iterations executed after the one of the iterations.

This embodiment can be advantageous because it provides for iterative gradual increase of symbols represented in the displayed menu as their corresponding icons. Since the representation of information as icons might be more compact in comparison of representation of information using words, the area of the portion of the screen used for the displaying of the menu can be gradually decreased throughout the iterative repetitive execution of said steps. This process of iterative substitution of the words and/or the word combinations in the displayed menu by their respective icons can be stopped before the menu is fully displayed using only icons. This might be the case when the saturation value of the registered saccades does not decrease from iteration to iteration. This might indicate that a physiological limit of optimum perception of the displayed menu has been reached. The representation of the displayed menu in a particular iteration might use too much icons and as a result thereof a brain of the user generates an increasing number of saccades in order to provide required level of understanding/interpretation of the displayed menu.

According to another embodiment, the electronic system is a battery powered electronic hand held system and the eye tracking component comprises a video camera configured to register the saccades of the user eyes of the user having its starting and/or end gaze fixation point within the portion of the screen, wherein the electronic system is configured to register user interaction events of the user with the symbols displayed on the menu. The method of any of the aforementioned embodiments further comprises executing another executable code stored in the memory by the microprocessor in response to registering a user interaction event with one or more symbols displayed on the menu.

The user interaction event is understood here in a very broad sense. It might be for instance clicking, scrolling, typing, selecting an option in an input field of the menu, activating an option in the displayed menu in response to finger activation by the user in case when the display has a tough screen functionality, etc. The user interaction event can cause execution of another executable code (e.g. application) when the user interaction event activates this application by selecting its respective icon.

According to another embodiment, the method further comprises causing the electronic system to limit generation of display refresh data for the portion of the screen in response to the iterative repeating of execution of said steps.

This option might be useful for reduction of a power consumption of the electronic system. It could be the case when the user activity is limited to processing of data in the menu. In this case there is no need for the generation of the refresh data for the rest of the display area which does not display the menu.

According to another embodiment, the method further comprises: halting the iterative repeating of execution of said steps in response to terminating of the displaying of the menu on the portion of the screen of the display; and resuming the iterative repeating of execution of said steps in response to restating of the displaying of the menu on the portion of the screen of the display.

This feature can be advantageous, when the user uses the menu in different sessions. The menu can be closed in between the sessions. When the menu is reopened in the next session, the iterative execution of the method can be resumed using the view of the menu used in the previous session.

According to another embodiment, the method further comprises: hating the iterative repeating of execution of said steps in response to terminating of the displaying of the menu on the portion of the screen of the display; and storing the icon display threshold value on a remote data storage in response to the halting of the iterative repetition of the execution of said steps.

This feature can be advantageous, because the data enabling to resume the execution of the iterations is stored on the remote data storage. This enables resuming execution of the method on another electronic system, when the data is downloaded from the remote data storage, which can be a separate memory card or a data storage in a computer cloud.

According to another embodiment, the present invention relates to a method for controlling another electronic system comprising a microprocessor, an eye tracker component, a display, and a memory, the memory comprising an executable code being executable by the microprocessor. The executable code when executed by the microprocessor causes the electronic system to perform the following: loading from the remote data storage the icon display threshold value which was stored thereon in response to the halting of the iterative repeating of execution of the method steps of previously mentioned embodiment; and resuming the iterative repeating of execution of the method steps of the previously mentioned embodiment on the another electronic system using the loaded icon display threshold value.

This method can provide extra functionality when the execution of the method is continued on the another electronic system configured to display the same menu.

According to another embodiment, the method further comprise: executing the method of the aforementioned embodiments for each user of a user group, wherein the icon display threshold value is decreased from iteration to iteration such that symbol sets of the symbols displayed as the their respective icons in the iterations having the same order in sequences of the iterations for each of the users of the user group are the same, wherein the executing of the method of the aforementioned embodiments for the each user of the user group comprises registering changes made by the each user in one or more input fields of the menu; calculating an average number of the changes in the one or more input fields per user for each of iteration groups of the iterations having the same order in the sequences of the iterations, wherein each of the iteration groups comprises at least a threshold number of the iterations, the threshold number of the iterations being equal or less to a number of the users in the user group and bigger than zero; generating a sequence of menu changing steps, wherein each iteration group for which the average number of the changes per user is calculated has the respective menu changing step, wherein the sequence of the menu changing steps has the same order as the sequence of the iterations comprised in the respective iteration groups, wherein each of the menu changing steps comprises the symbol set being the same as in the iteration of the respective iteration group, wherein each of the menu changing steps comprises a respective changes threshold value being equal to the calculated average number of the changes per user for the respective iteration group; and storing on a remote data storage sequence of the menu changing steps.

This embodiment can be advantageous, for performing the iterative displaying of different views of the menu without using the eye tracker component. The collected statistical data enables switching between different views of the menu using counted inputs performed by a user in the input fields of the menu.

According to another embodiment, the ranking of the symbol is an increasing function of a sum of a number of its repetitions in the menu multiplied by the first weight coefficient and a number of letters in the respective word or the respective word combination multiplied by a second weight coefficient.

This feature can be advantageous for flexible automated calculation of the rankings of the symbols.

According to another embodiment, the present invention provides for a method for controlling another electronic system comprising a microprocessor, a display, and a memory, the memory comprising an executable code being executable by the microprocessor. The executable code when executed by the microprocessor causes the another electronic system to perform the following: loading from the remote data storage of claim 10 the sequence of the menu changing steps of generated in the aforementioned embodiment on the another electronic system; and iteratively repeating execution of the following steps according to the sequence of the menu changing steps, wherein the following steps are: displaying the menu on a portion of a screen of the display of the another electronic system, wherein the symbols of the symbol set of the menu changing step of the current iteration are displayed in the menu as their respective icons if the symbol set of the menu changing step of the current iteration is not an empty set; and registering changes made by another user in the one or more input fields of the menu displayed on the portion of the screen of the display of the another electronic system. The execution of the next iteration is started when a number of the registered changes made by the another user in the one or more input fields of the menu in the current iteration exceeds the changes threshold value of the menu changing step of the current iteration.

This embodiment can be advantageous for executing a method on an electronic system without using the eye tracking component.

According to another embodiment, wherein the symbols displayed in the menu are arranged in accordance with a syntax of a natural language.

This embodiment can be advantageous because it facilitates similar saccade patterns for the different views of the menu.

According to another embodiment, the present invention provides for a computer readable medium having stored thereon a computer executable code for execution by a microprocessor controlling an electronic system, wherein execution of the executable code causes the electronic system to execute a method of any one of the aforementioned embodiments.

According to another embodiment, the present invention provides for an electronic system having a memory storing a computer executable code for execution by a microprocessor controlling the electronic system, wherein execution of the executable code causes the electronic system to execute a method of any one of the aforementioned embodiments.

### Brief Description of the Drawings

**FIG. 1** is a view of a menu.
**FIG. 2** is a view of a menu.
**FIG. 3** is a view of a menu.
**FIG. 4** are tables of symbol representation..
**FIG. 5** is a block diagram of an electronic system.
**FIG. 6** is a block diagram of a process.
**FIG. 7** is a time series of a saccade sequence.
**FIG. 8** is a time series of a saccade sequence.
**FIG. 9** is a block diagram of a process.
**FIG. 10** is a block diagram of a process.
**FIG. 11** is a user data table.
**FIG. 12** is a table storing user statistics and data of the menu changing steps.
**FIG. 13** is a block diagram of a process.

### Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, electrical, and optical changes may be made without departing from the scope of the present invention. The following description of example embodiments is, therefore, not to be taken in a limited sense, and the scope of the present invention is defined by the appended claims.

There numerous ways of displaying of information for a user. The information can be displayed for instance in a form of a menu or a GIU. As usual displaying of the information as icons is more compact, but on the other hand it might be too complex for the user, because the meaning of the icons may be not clear to the user. Even in a case of simple home appliances equipment, icons representing different functionalities of this equipment might require calling help functions or finding their meaning in a manual of the equipment. Thus there is a need for optimization of a view of the information in a user friendly way.

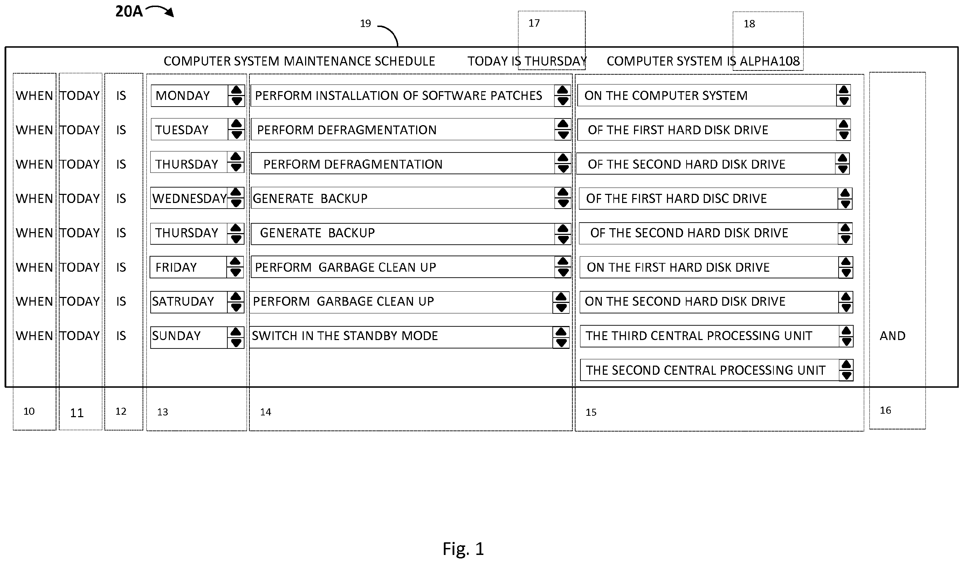

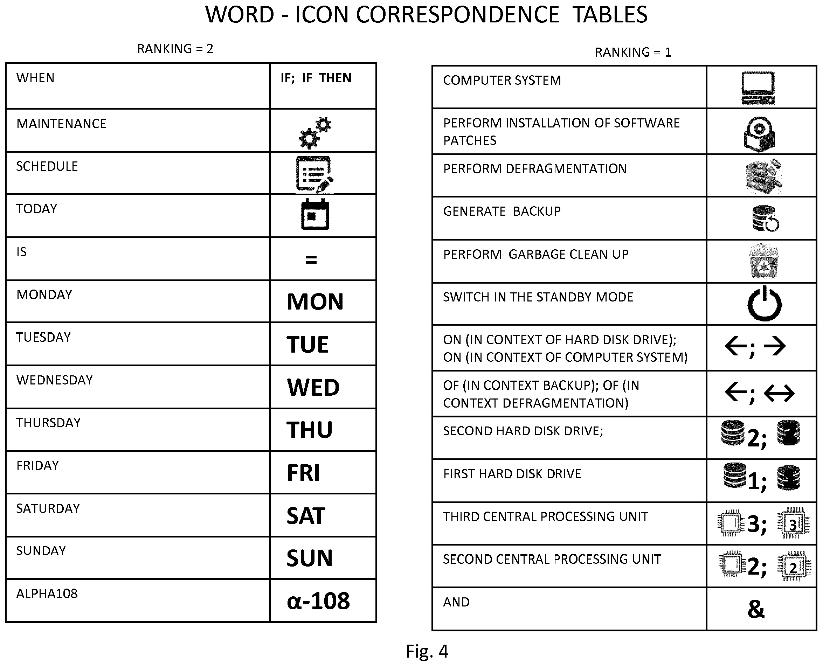

Figs. 1-3 illustrates different views 20A, 20B, 20C of an example menu 19 for programming a computer system maintenance schedule, wherein symbols are represented either as their respective words/word combinations or their respective icons as depicted in tables of correspondence on Fig. 4. Fig. 1 illustrates the view of the menu, wherein all symbols are displayed as their respective words or word combinations. The menu comprises fields 10, 11, 12 for displaying fixed information, optional fields 16 for uniting different functionalities where, fields 17, 18 for displaying variable information, and input fields 13, 14, 15 for imputing different options in the menu. This way of information presentation is very user friendly especially when the symbols of the menu are displayed using a syntax of a natural language. The user can read it as a text and work with it without a need to call any help functions. The boxes being circumferential to groups of the fields 10-18 are drawn for illustrative purposes only, i.e. they are not a part of the displayed menu 19.

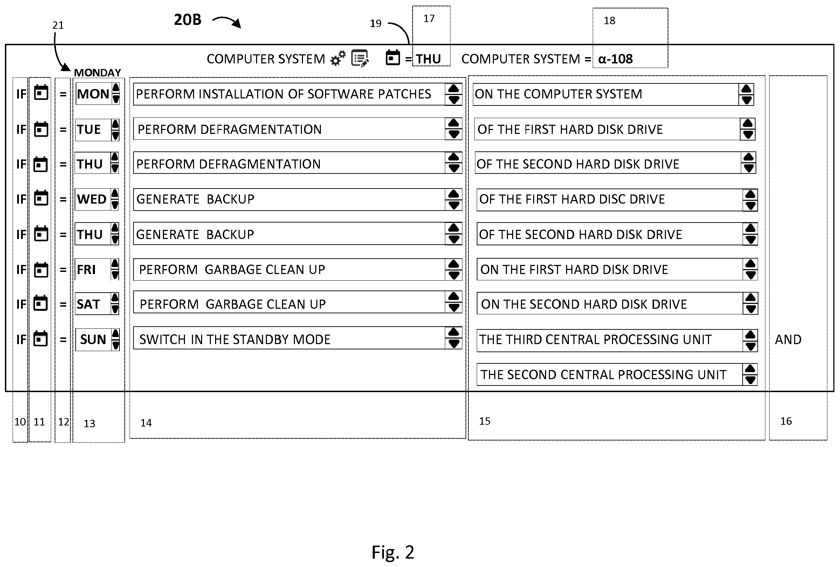

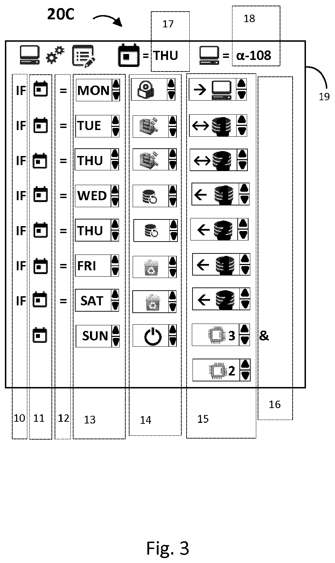

Fig. 2 illustrates the view 20B of the menu 19, wherein some of the symbols are displayed as their respective icons according to the correspondence tables of Fig. 4. In particular, the symbols in the fields 10-13, 17, and 18 are displayed as their respective icons. Fig. 3 illustrates the view 20C of the menu 19, wherein all symbols are displayed as their respective icons. With independent of the view of the menu 19, the symbols can be displayed using the syntax of the natural language.

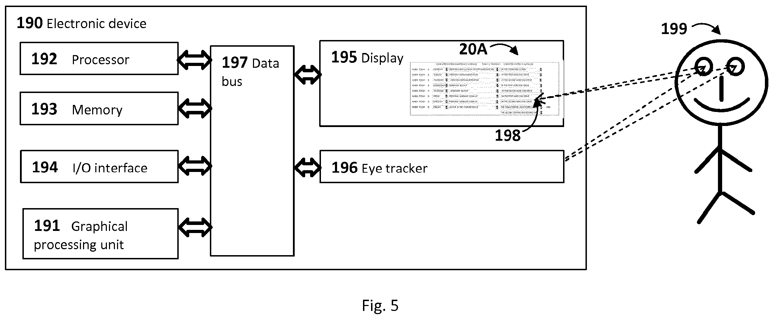

Fig. 5 illustrates an example electronic system 190 being configured to display the menu 19. The electronic system can be but is not limited to a hand held battery powered mobile system, a tablet, a smartphone, a home appliance equipment, a remote control unit of an electronic system, a computer, and a microcontroller. The electronic system 190 comprises a microprocessor 192, an eye tracker component 196, a display 195, and a memory 193. The memory 193 can comprise an executable code being executable by the microprocessor, which when executed cases the display to display different views 20A-C of the menu 19, to register saccades of user eyes of a user 199, to process the registered saccades. The microprocessor 192 can generate a display refresh data (e.g. color and light intensity of pixels of the display 195). Alternatively a graphical processing unit 191 of the electronic system 190 can generate the display refresh data. The electronic system can comprise further an input-output interface for communicating with the user. Alternatively or in addition this function can be performed by the display 195, when it has a touch screen functionality. The microprocessor 192, the memory 193, the input-output interface 194, the graphical processing unit 191, the display 195, the eye tracker component can be communicatively coupled to each other via a data bus 197.

The electronic system can be a battery powered electronic hand held system and the eye tracking component can comprises a video camera configured to register the saccades of the user eyes of the user. The electronic system can be configured to register user interaction events of the user with the symbols displayed on the menu, execute another executable code stored in the memory by the microprocessor in response to registering a user interaction event with one or more symbols displayed on the menu. The user interaction event can be registered via the input-output interface and/or the display, when the latter has a touch screen functionality.

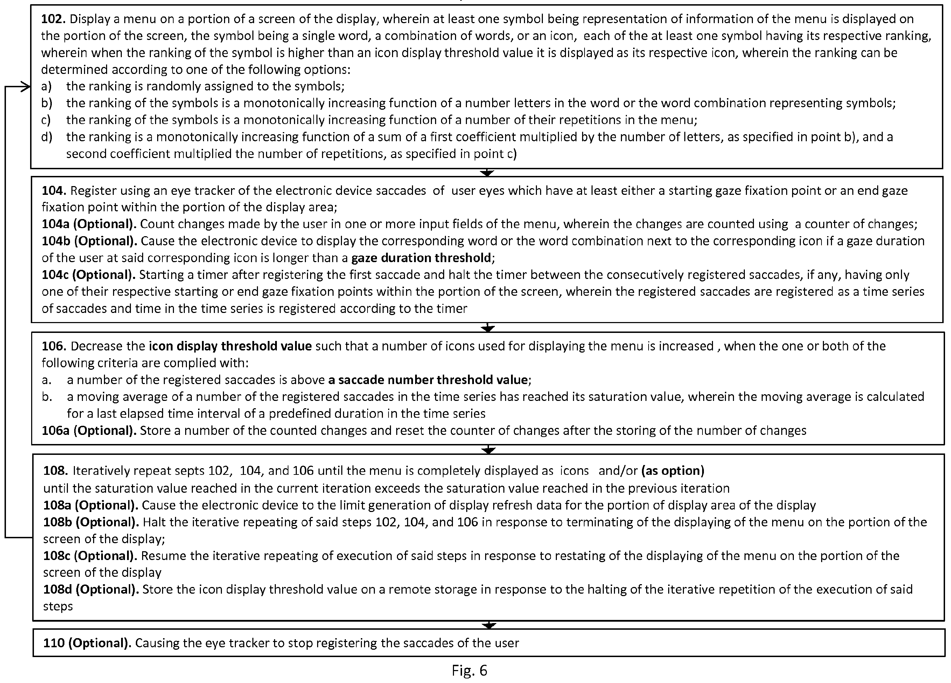

Fig. 6 illustrates a method which can be executed by the electronic device 109. The method begins with process block 102. In process block 102 the menu 19 is displayed on a portion of a screen of the display 195. The symbols of the menu representing information of the menu are displayed in the menu as a single word, a combination of words, or an icon. Each of the symbols has its respective ranking. When the ranking of the symbol is higher than an icon display threshold value it is displayed as its respective icon. The ranking can be determined according to one of the following options: a) the ranking is randomly assigned to the symbols, b) the ranking of the symbol is a monotonically increasing function of a number letters in the word or the word combination representing the symbol (i.e. the symbols like "perform installation of software patches" or "third central processing unit" (Fig. 4) with big amount of the letters in their respective word or word combinations have the higher ranking than the other symbols); c) the ranking of the symbol is a monotonically increasing function of a number of its repetitions in the menu (i.e. symbols which have high repetition rate like "today", "when", "is" (Fig. 4) in the menu have higher ranking than the other symbols); d) the ranking can be a linear combination of the ranking functions of points b) and c), e.g. the ranking of the symbol is an increasing function of a sum of a number of its repetitions in the menu multiplied by the first weight coefficient and a number of letters in the respective word or the respective word combination multiplied by a second weight coefficient.

Turning back the tables depicted on Fig. 4, the symbols of the menu 19 are split in two groups. The symbols in the left table have the ranking equal to two, while the symbols in the right table have the ranking equal to one. When the icons display threshold value is bigger than 2, then the menu 19 has the view 20A (Fig. 1). When the icons display threshold value is bigger than 1 and less than 2, then the menu 19 has the view 20B (Fig. 2). When the icons display threshold value is less than 1, then the menu 19 has the view 20C (Fig. 3).

Process block 104 is executed after process block 104. In process block 104 the electronic system registers saccades of user eyes using the eye tracker component. The electronic system can limit registering of the saccades to the ones which have at least either a starting gaze fixation point or an end gaze fixation point within the portion of the display area. Other saccades carry very little information, because they are triggered as usual by other than working with the menu events, e.g. when the user is interrupted for a phone call.

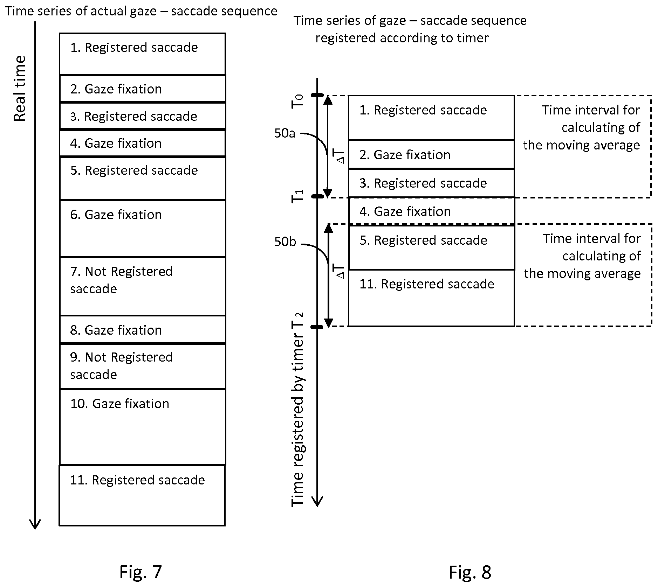

Fig. 7 illustrates a sequence of registered/not registered saccades and gaze fixation points 1-12 made by the user eyes in real time in accordance with criterion of process block 104. The first element in time series is a registered saccade, because it has its starting gaze fixation point outside the portion of the display area displaying the menu and its end gaze fixation point inside said portion of the display area. The second element in the time series is a gaze fixation point on one of the symbols of the displayed menu. The third element in the time series is another registered saccade, because it has its starting and end gaze fixation points inside said portion of the display area displaying the menu. The fourth element in the time series is another gaze fixation point on another one of the symbols of the displayed menu. The fifth element in the time series is yet another registered saccade, because it has its starting gaze fixation points inside said portion of the display area displaying the menu and its end gaze fixation point outside said portion of the display area displaying the menu. The sixth element in the time series is yet another gaze fixation point outside said portion of the display area (e.g. another menu on the display or even another object, e.g. a telephone). The seventh element in the time series is a not registered saccade, because it has its starting and end gaze fixation points outside said portion of the display area displaying the menu. The eights element in the time series is yet another gaze fixation point outside said portion of the display area. The ninth element in the time series is another not registered saccade, because it has its starting and end gaze fixation points outside said portion of the display area displaying the menu. The tenth element in the time series is yet another gaze fixation point outside said portion of the display area. The eleventh element in time series is yet another registered saccade, because it has its starting gaze fixation point outside the portion of the display area displaying the menu and its end gaze fixation point inside said portion of the display area.

Process block 104 can comprise an optional process block 104a, in which a number of changes/input fields made by the user in the input fields is registered/counted using e.g. a counter of changes.

Process block 104 can comprise another optional process block 104b, in which the electronic device displays the corresponding word or the word combination 21 next to the corresponding icon (Fig. 2) if a gaze duration of the user at said corresponding icon is longer than a gaze duration threshold.

Process block 104 can further comprise additional process block 104c enabling detailed registration of saccades as a time series. In process block 104c a timer is stared after registering the first saccade and halted between the consecutively registered saccades, if any, having only one of their respective starting or end gaze fixation points within the portion of the screen, wherein the registered saccades are registered as a time series of saccades and time in the time series is registered according to the timer.

The result of registering of the saccades according to algorithm of process block 104c is illustrated on Fig. 8. The timer is started after the registering of the first saccade, i.e. the first element in the time series on Fig. 7 when time = T₀ on Fig. 8. The elements 2-5 in the time series registered using timer (Fig. 8) and in the actual time series (Fig. 7) are the same, because the respective saccades comply the criterion of process block 104. The next element in the time series registered using timer is the last saccade in the actual time series because it is the next following saccade in the actual time series which complies with the criterion for registration of process block 104.

Process block 106 is executed after process block 104. In process block 106 the icon display threshold value is decreased such that a number of icons used for displaying the menu is increased. For instance the icon display threshold value can be decrease from 4 to 1.5. As a result thereof the view 20B is displayed instead of the view 20A. Process block 106 is executed when one or both of the following criteria are complied with: a) a number of the registered saccades in process block 104 is above a saccade number threshold value, b) a moving average of a number of the registered saccades in the time series has reached its saturation value, wherein the moving average is calculated for a last elapsed time interval of a predefined duration in the time series.

An illustrative example of the calculation of the moving average is depicted on Fig. 8. The moving average of a number of the registered saccades is calculated for a fixed time interval ΔT 50a, 50b. At the moment of time T₁ the moving average of the registered saccades is equal to 2 per time interval ΔT, while at the moment of time T₂ the moving average of the registered saccades per time interval ΔT is equal to 1.

Process block 106 can comprise an optional process block 106a, in which a number of the counted changes/inputs made by the user in the input fields of the menu a stored, and the counter of the changes after the storing of the number of changes is set to zero.

Process block 108 is executed after process block 106. In process block 108 the process blocks 102, 104, and 106 are iteratively repeated until the menu is completely displayed as icons. Alternatively the iterative repetition of said process blocks can be terminated when the saturation value reached in the current iteration exceeds the saturation value reached in the previous iteration if the latter is available. The latter criterion can indicate that perception of the interface by the user starts to degrade, i.e. the menu is too heavily saturated with icons.

Process block 108 can comprise an optional process block 108a, in which the electronic device the limits generation of display refresh data for the portion of display area of the display displaying the menu. This feature can be beneficial for optimization of the energy consumption by the electronic system because of the following. A screen area used for displaying on the screen of at least of one of the icons is less than a screen area used for displaying on the screen of its respective word or word combination (e.g. the icon of the computer system requires less display area than displaying the text "COMPUTER SYSTEM"). A screen area used for the displaying of the menu on the portion of the screen in one of the iterations is bigger than a screen area used for the displaying of the menu on the portion of the screen in another one of the iterations executed after the one of the iterations. Thus execution of the method depicted on Fig. 6 enables reduction of the screen area used for displaying of the menu on the portion of the screen and as a result thereof a number of pixels for which the refresh display data (e.g. intensity and color) has to be generated is reduced throughout execution of the method depicted on Fig. 6.

Process block can comprise optional process block 108b, in which the iterative repeating of said process blocks 102, 104, and 106 is halted in response to terminating of the displaying of the menu on the portion of the screen of the display.

Process block 108 can comprise another optional process block 108c, in which the iterative repeating of execution of said process blocks 102, 104, and 106 is resumed in response to restating of the displaying of the menu on the portion of the screen of the display.

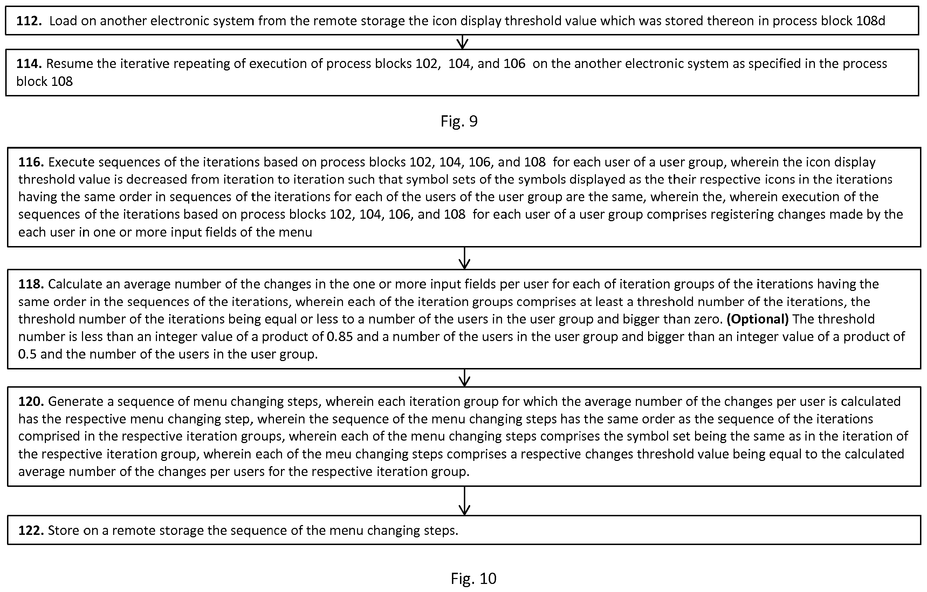

Process block 108 can comprise yet another optional process block 108d, in which the icon display threshold value is stored on a remote data storage in response to the halting of the iterative repetition of the execution of said steps. The stored icon display threshold value can be loaded on another electronic system configured to display the menu 19 (process block 112 on Fig. 9) for resuming iterative execution of said process blocks 102, 104, and 106 on it using the loaded icon display threshold value (process block 114 on Fig. 9). The another electronic system can have the same architecture as the electronic system depicted on Fig. 5.

An optional process block 110 is executed after process block 108, in which the registering of the saccades of the user eyes using the eye tracker component is stopped.

Fig. 10 illustrates a process blocks of a method enabling extension of the method depicted on Fig. 6 for electronic systems which do not use the eye tracking functionality. The method beings with process block 116. In process block 116 process blocks 102, 104, 106, and 108 are executed for each user of a user group. The icon display threshold value is decreased from iteration to iteration such that symbol sets of the symbols displayed as the their respective icons in the iterations having the same order in sequences of the iterations for each of the users of the user group are the same. This means that each of the users is confronted with the same sequence of the menu views (e.g. sequence of the menu views 20A, 20B, 20C having corresponding symbols stets, wherein a first set corresponding to view 20A is an empty set, a second set corresponding to view 20B is a list of symbols in the left table having ranking = 2 on Fig. 4, a third set corresponding to view 20C is a list of symbols in both of the tables on Fig. 4, i.e. the third set comprises all symbols). The executing of the process blocks 102, 104, 106, and 108 for the each user of the user group comprises registering changes made by the each user in one or more input fields of the menu as specified in the process blocks 104a and 106a.

Process block 118 is executed after process block 116. In process block 118 an average number of the changes in the one or more input fields of the menu per user is calculated for each of iteration groups of the iterations having the same order in the sequences of the iterations. Process block 118 can be executed only for each of the iteration groups comprising at least a threshold number of the iterations. The threshold number of the iterations be can equal or less to a number of the users in the user group and bigger than zero, preferably bigger or equal to an integer of a ratio of a number of the users in the user group. In the other words, in order to have reliable statistics it might be necessary to select only iterations which were completed by at least certain percentage of the users (e.g. not less than 50 % of the users).

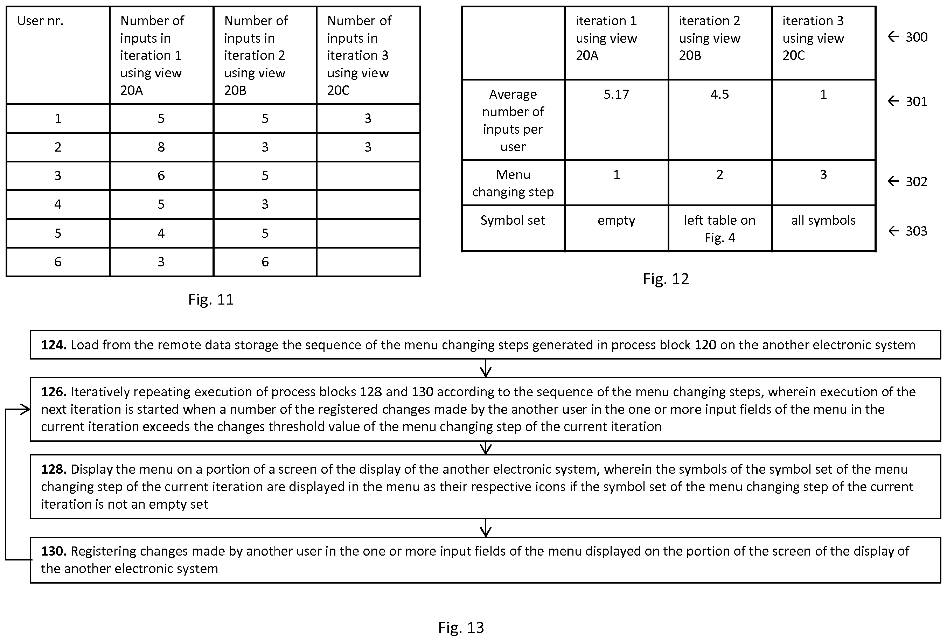

Execution of process block 118 is illustrated using table on Fig. 11 and table on Fig. 12. The table Fig. 11 summarizes data for 6 users. For each of the users the method of Fig. 6 is executed in menu views 20A, 20B, and 20C. Only users 1 and 2 have used all three views. The rest of the users have used only the first two views. The users 3-6 could for instance stop using the menu, before the statistics the method of Fig. 6 was completed. As it mentioned before the processing of the collected data can be limited to the first two iterations because not enough users have completed the third iteration. The columns indicated a number of changes/inputs in one or more input fields of the menu made by each of the users in a single iteration. The first row in table on Fig. 12 row shows average value of the inputs made in each of the iterations made per user. In order to have a reliable statistics, only iterations which were completed by at least 50% of the users can be used for further processing in the method. As a result thereof, the statistics of the third iteration hast to be discarded, when the aforementioned criterion is applied.

Process block 120 is executed after process block 118. In process block 120 a sequence of menu changing steps is generated. Each iteration group for which the average number of the changes per user is calculated in process block 118 has the respective menu changing step (e.g. rows 300 and 302 in the table on Fig. 12). The sequence of the menu changing steps has the same order as the sequence of the iterations comprised in the respective iteration groups, or iterations as depicted in row 300 in the table on Fig. 12. Each of the menu changing steps comprises the symbol set being the same as in the iteration of the respective iteration group (row 303 in the table on Fig. 12). Each of the menu changing steps comprises a respective changes threshold value being equal to the calculated average number of the changes per user for the respective iteration group (row 301 in the table on Fig. 12). Alternatively the changes threshold value can be an integer value of the average number of the changes per user for the respective iteration group.

Process block 122 is executed after process block 120. In process block 122 the sequence of the menu changing steps is stored on a remote data storage. The remote data storage can be but is not limited to, a memory card, a data storage in a computer cloud, and a memory stick.

Fig. 13 illustrates another method where the sequence of the menu changing steps is used by another electronic system configured to display the menu. The method begins with process block 124. In process block 124 the sequence of the menu changing steps generated in process block 120 is loaded from the remote data storage on the another electronic system. The another electronic system can have the same architecture as the electronic system depicted on Fig. 5. However the another electronic system does not necessarily need to have the eye tracking component, or its eye tracking component does not have to be used for execution of the method illustrated on Fig. 13.

Process block 126 is executed after process block 124. Execution of process block 126 causes iterative repetitive execution of the next following process blocks 128 and 130 according to the sequence of the menu changing steps. The execution of the next iteration is started when a number of the registered changes made by another user in the one or more input fields of the menu in the current iteration exceeds the changes threshold value of the menu changing step of the current iteration. In process block 128, the menu on a portion of a screen of the display of the another electronic system is displayed. The symbols of the symbol set of the menu changing step of the current iteration are displayed in the menu as their respective icons if the symbol set of the menu changing step of the current iteration is not an empty set. Process block 130 is executed in parallel with process block 128. In process block 130 changes made by another user in the one or more input fields of the menu displayed on the portion of the screen of the display of the another electronic system are registered.

Turning back the example table on Fig. 12, the execution of the method on Fig. 13 can be illustrated as follows. First execution of process blocks 124, 126, 128, and 130 results in displaying of the view 20A on the display. After the user makes 6 changes in the one or more input fields of the menu, the next iterative execution of the process blocks 126, 128, 130 is started. In this iteration the view 20B is displayed on the display. After the user makes 5 changes in the one or more input fields of the menu, the another next iterative execution of the process blocks 126, 128, 130 is started. In this iteration the view 20C is displayed on the display.

## Claims

1. A method for controlling an electronic system (190) comprising a microprocessor (192), an eye tracker component (196), a display (195), and a memory (193), the memory comprising an executable code being executable by the microprocessor, the executable code when executed by the microprocessor causing the electronic system to perform the following steps of the method:
• displaying a menu (20A; 20B; 20C) on a portion of a screen of the display (102), wherein at least one symbol being representation of information of the menu is displayed in the menu on the portion of the screen, the symbol being a single word, a combination of words, or an icon, each of the at least one symbol having its respective ranking, wherein when the ranking of the symbol is higher than an icon display threshold value it is displayed as its respective icon;
• registering using the eye tracker component saccades of user eyes of a user, wherein each of the registered saccades has its starting and/or end gaze fixation point within the portion of the screen (104);
• decreasing the icon display threshold value such that a number of the icons used for the displaying of the menu on the portion of the screen is increased when a number of the registered saccades exceeds a saccade number threshold value (106); and
• iteratively repeating execution (108) of the steps of:
∘ the displaying the menu on a portion of the screen of the display;
∘ the registering using the eye tracker component of saccades of the user eyes of the user, wherein each of the registered saccades has its starting and/or end gaze fixation point within the portion of the screen; and
∘ the decreasing of the icon display threshold value such that a number of the icons used for displaying of the menu on the portion of the screen is increased when a number of the registered saccades in the current iteration exceeds a saccade number threshold value;
wherein the menu is displayed on the respective portion of the screen in each of the iterations, wherein the iterative repeating of execution of said steps is executed until the menu is fully displayed on the portion of the screen using the icons, wherein a screen area used for displaying on the screen of at least one of the icons is less than a screen area used for displaying on the screen of its respective word or word combination, wherein a screen area used for the displaying of the menu on the portion of the screen in one of the iterations is bigger than a screen area used for the displaying of the menu on the portion of the screen in another one of the iterations executed after the one of the iterations.

2. A method for controlling an electronic system (190) comprising a microprocessor (192), an eye tracker component (196), a display (195), and a memory (193), the memory comprising an executable code being executable by the microprocessor, the executable code when executed by the microprocessor causing the electronic system to perform the following steps of the method:
• displaying a menu on a portion of a screen of the display (102), wherein at least one symbol being representation of information of the menu is displayed on the portion of the screen, the symbol being a single word, a combination of words, or an icon, each of the at least one symbol having its respective ranking, wherein when the ranking of the symbol is higher than an icon display threshold value it is displayed as its respective icon;
• registering using the eye tracker component saccades of user eyes of a user, wherein each of the registered saccades has its starting and/or end gaze fixation point within the portion of the screen (104), wherein the registering using the eye tracker component saccades of the user eyes of the user comprises:
∘ starting a timer after registering the first saccade (104c), and
∘ halting the timer between the consecutively registered saccades, if any, having only one of their respective starting or end gaze fixation points within the portion of the screen, wherein the registered saccades are registered as a time series of saccades and time in the time series is registered according to the timer (104c);
• decreasing the icon display threshold value such that a number of icons used for displaying the menu on the portion of the screen is increased when a moving average of a number of the registered saccades in the time series has reached a saturation value (106), wherein the moving average is calculated for a last elapsed time interval (50a, 50b) of a predefined duration in the time series; and
• iteratively repeating execution (108) of the steps of:
∘ the displaying the menu on a portion of the screen of the display;
∘ the registering using the eye tracker component of the saccades of the user eyes of the user, wherein each of the registered saccades has its starting and/or end gaze fixation point within the portion of the screen; and
∘ the decreasing of the icon display threshold value such that a number of icons used for displaying the menu in the natural language on the portion of the screen is increased when a moving average of a number of the registered saccades in the time series has reached a saturation value in the current iteration, wherein in the current iteration the moving average is calculated for the last elapsed time interval of the predefined duration in the time series;
wherein the menu is displayed on the respective portion of the screen in each of the iterations, wherein the iterative repeating of execution of said steps is executed until the menu is fully displayed using the icons or the saturation value reached in the current iteration exceeds the saturation value reached in the previous iteration, wherein a screen area used for displaying on the screen of at least one of the icons is less than a screen area used for displaying on the screen of its respective word or word combination, wherein a screen area used for the displaying of the menu on the portion of the screen in one of the iterations is bigger than a screen area used for the displaying of the menu on the portion of the screen in another one of the iterations executed after the one of the iterations.

3. The method of any one of the preceding claims, wherein the electronic system is a battery powered electronic hand held system and the eye tracking component comprises a video camera configured to register the saccades of the user eyes of the user, wherein each of the registered saccades by the video camera has its starting and/or end gaze fixation point within the portion of the screen, wherein the electronic system is configured to register user interaction events of the user with the symbols displayed on the menu, the method comprising:
• executing another executable code stored in the memory by the microprocessor in response to registering a user interaction event with one or more symbols displayed on the menu.

4. The method of claim 1 or 2, comprising:
• causing the electronic system to limit generation of display refresh data for the portion of the screen in response to the iterative repeating of execution of said steps (108a).

5. The method of any one of the preceding claims, comprising:
• halting the iterative repeating of execution of said steps in response to terminating of the displaying of the menu on the portion of the screen of the display (108b); and
• resuming the iterative repeating of execution of said steps in response to restarting of the displaying of the menu on the portion of the screen of the display (108c).

6. The method of any one of the preceding claims 1-4, comprising:
• halting the iterative repeating of execution of said steps in response to terminating of the displaying of the menu on the portion of the screen of the display (108b); and
• storing the icon display threshold value on a remote data storage in response to the halting of the iterative repetition of the execution of said steps (108d).

7. The method of claim 6, comprising a method for controlling another electronic system (109) comprising another microprocessor (192), another eye tracker component (196), another display (195), and another memory (193), the memory comprising another executable code being executable by the other microprocessor, the other executable code when executed by the other microprocessor causing the other electronic system to:
• loading from the remote data storage the icon display threshold value which was stored thereon in response to the halting of the iterative repeating of execution of the method steps of claim 8 (112); and
• resuming the iterative repeating of execution of the method steps of claim 8 on the another electronic system using the loaded icon display threshold value (114).

8. The method of claim 1 or 2, comprising causing the electronic system to perform the following:
• executing the method of claim 1 or 2 for each user of a user group, wherein the icon display threshold value is decreased from iteration to iteration such that symbol sets of the symbols (303) displayed as the their respective icons in the iterations (300) having the same order in sequences of the iterations for each of the users of the user group are the same, wherein the executing of the method of claim 1 or 2 for the each user of the user group comprises registering changes in one or more input fields (13-15) of the menu which are made by the each user (116);
• calculating an average number of the changes in the one or more input fields per user for each of iteration groups of the iterations having the same order in the sequences of the iterations, wherein each of the iteration groups comprises at least a threshold number of the iterations, the threshold number of the iterations being equal or less to a number of the users in the user group and bigger than zero (118);
• generating a sequence of menu changing steps, wherein each iteration group for which the average number of the changes per user is calculated has the respective menu changing step, wherein the sequence of the menu changing steps has the same order as the sequence of the iterations comprised in the respective iteration groups, wherein each of the menu changing steps comprises the symbol set being the same as in the iteration of the respective iteration group, wherein each of the meu changing steps comprises a respective changes threshold value being equal to the calculated average number of the changes per user for the respective iteration group (120); and
• storing on a remote data storage sequence of the menu changing steps (122).

9. The method of any one of the preceding claims, wherein the ranking of the symbol is an increasing function of a sum of a number of its repetitions in the menu multiplied by the first weight coefficient and a number of letters in the respective word or the respective word combination multiplied by a second weight coefficient.

10. The method of claim 8, comprising a method for controlling another electronic system (190) comprising another microprocessor (192), a display (195), and another memory (193), the memory comprising another executable code being executable by the another microprocessor, the another executable code when executed by the another microprocessor causing the another electronic system to:
• loading from the remote data storage the sequence of the menu changing steps on the another electronic system (124); and
• iteratively repeating execution of the following steps (126) according to the sequence of the menu changing steps:
∘ displaying the menu on a portion of a screen of the display of the another electronic system, wherein the symbols of the symbol set of the menu changing step of the current iteration are displayed in the menu as their respective icons if the symbol set of the menu changing step of the current iteration is not an empty set (128); and
∘ registering changes in the one or more input fields (13-15) of the menu which are made by another user, wherein the menu is displayed on the portion of the screen of the display of the another electronic system (130),
wherein execution of the next iteration is started when a number of the registered changes made by the another user in the one or more input fields of the menu in the current iteration exceeds the changes threshold value of the menu changing step of the current iteration.

11. The method of any one of the preceding claims, wherein the symbols displayed in the menu are arranged in accordance with a syntax of a natural language.

12. A computer readable medium having stored thereon a computer executable code for execution by a microprocessor controlling an electronic system, wherein execution of the executable code causes the electronic system to execute a method of any one of the preceding claims.

13. An electronic system having a memory storing a computer executable code for execution by a microprocessor controlling the electronic system, wherein execution of the executable code causes the electronic system to execute a method of any one of claims 1-11.

## Patentansprüche

1. Verfahren zum Steuern eines Elektroniksystems (190), umfassend einen Mikroprozessor (192), eine Eyetrackerkomponente (196), eine Anzeige (195) und einen Speicher (193), wobei der Speicher einen ausführbaren Code umfasst, der durch den Mikroprozessor ausführbar ist, wobei der ausführbare Code, wenn er durch den Mikroprozessor ausgeführt wird, das Elektroniksystem veranlasst, die folgenden Schritte des Verfahrens auszuführen:
• Anzeigen eines Menüs (20A; 20B; 20C) auf einem Teil eines Bildschirms der Anzeige (102), wobei mindestens ein Symbol, das repräsentativ für Informationen des Menüs ist, im Menü auf dem Teil des Bildschirms angezeigt wird, wobei das Symbol ein einzelnes Wort, eine Kombination von Wörtern oder ein Bildzeichen ist, wobei jedes von dem mindestens einen Symbol sein entsprechendes Ranking aufweist, wobei dann, wenn das Ranking des Symbols höher als ein Bildzeichenanzeigeschwellenwert ist, es mit seinem entsprechenden Bildzeichen angezeigt wird;
• Registrieren, unter Verwendung der Eyetrackerkomponente, von Sakkaden von Benutzeraugen eines Benutzers, wobei jede der registrierten Sakkaden ihren anfänglichen und/oder abschließenden Blickfixierungspunkt innerhalb des Teils des Bildschirms (104) hat;
• Verringern des Bildzeichenanzeigeschwellenwerts, sodass eine Anzahl der Bildzeichen, die zum Anzeigen des Menüs auf dem Teil des Bildschirms genutzt werden, erhöht wird, wenn eine Anzahl der registrierten Sakkaden einen Sakkadenanzahlschwellenwert (106) überschreitet; and
• iteratives Wiederholen der Ausführung (108) der Schritte:
∘ des Anzeigens des Menüs auf einem Teil des Bildschirms der Anzeige;
∘ des Registrierens, unter Verwendung der Eyetrackerkomponente, von Sakkaden der Benutzeraugen des Benutzers, wobei jede der registrierten Sakkaden ihren anfänglichen und/oder abschließenden Blickfixierungspunkt innerhalb des Teils des Bildschirms hat; und
∘ des Verringerns des Bildzeichenanzeigeschwellenwerts, sodass eine Anzahl der Bildzeichen, die zum Anzeigen des Menüs auf dem Teil des Bildschirms genutzt werden, erhöht wird, wenn eine Anzahl der registrierten Sakkaden in der aktuellen Iteration einen Sakkadenanzahlschwellenwert überschreitet;
wobei das Menü auf dem entsprechenden Teil des Bildschirms in jeder der Iterationen angezeigt wird, wobei das iterative Wiederholen der Ausführung der Schritte ausgeführt wird, bis das Menü unter Verwendung der Bildzeichen auf dem Teil des Bildschirm vollständig angezeigt wird, wobei ein zum Anzeigen mindestens eines der Bildzeichen auf dem Bildschirm genutzter Bildschirmbereich kleiner als ein zum Anzeigen seines entsprechenden Wortes oder seiner Wortkombination genutzter Bildschirmbereich ist, wobei ein zum Anzeigen des Menüs auf dem Teil des Bildschirms in einer der Iterationen genutzter Bildschirmbereich größer als ein zum Anzeigen des Menüs auf dem Teil des Bildschirms in einer weiteren der Iterationen, ausgeführt nach der einen der Iterationen, genutzter Bildschirmbereich ist.

2. Verfahren zum Steuern eines Elektroniksystems (190), umfassend einen Mikroprozessor (192), eine Eyetrackerkomponente (196), eine Anzeige (195) und einen Speicher (193), wobei der Speicher einen ausführbaren Code umfasst, der durch den Mikroprozessor ausführbar ist, wobei der ausführbare Code, wenn er durch den Mikroprozessor ausgeführt wird, das Elektroniksystem veranlasst, die folgenden Schritte des Verfahrens auszuführen:
• Anzeigen eines Menüs auf einem Teil eines Bildschirms der Anzeige (102), wobei mindestens ein Symbol, das repräsentativ für Informationen des Menüs ist, auf dem Teil des Bildschirms angezeigt wird, wobei das Symbol ein einzelnes Wort, eine Kombination von Wörtern oder ein Bildzeichen ist, wobei jedes von dem mindestens einen Symbol sein entsprechendes Ranking aufweist, wobei dann, wenn das Ranking des Symbols höher als ein Bildzeichenanzeigeschwellenwert ist, es als sein entsprechendes Bildzeichen angezeigt wird;
• Registrieren, unter Verwendung der Eyetrackerkomponente, von Sakkaden von Benutzeraugen eines Benutzers, wobei jede der registrierten Sakkaden ihren anfänglichen und/oder abschließenden Blickfixierungspunkt innerhalb des Teils des Bildschirms (104) hat, wobei das Registrieren von Sakkaden der Benutzeraugen des Benutzers unter Verwendung der Eyetrackerkomponente umfasst:
∘ Starten eines Timers nach Registrierung der ersten Sakkade (104c), und
∘ Anhalten des Timers zwischen den ggf. aufeinanderfolgend registrierten Sakkaden, die nur einen ihrer entsprechenden anfänglichen oder abschließenden Blickfixierungspunkte innerhalb des Teils des Bildschirms haben, wobei die registrierten Sakkaden als eine Zeitreihe von Sakkaden registriert sind und die Zeit in der Zeitreihe entsprechend dem Timer (104c) registriert ist;
• Verringern des Bildzeichenanzeigeschwellenwertes, sodass eine Anzahl von Bildzeichen, die zum Anzeigen des Menüs auf dem Teil des Bildschirms verwendet werden, erhöht ist, wenn ein gleitender Durchschnitt einer Anzahl der registrierten Sakkaden in der Zeitreihe einen Sättigungswert (106) erreicht hat, wobei der gleitende Durchschnitt für ein letztes verstrichenes Zeitintervall (50a, 50b) einer vordefinierten Dauer in der Zeitreihe berechnet wird; und
• iteratives Wiederholen der Ausführung (108) der Schritte:
∘ des Anzeigens des Menüs auf einem Teil des Bildschirms der Anzeige;
∘ des Registrierens, unter Verwendung der Eyetrackerkomponente, der Sakkaden der Benutzeraugen des Benutzers, wobei jede der registrierten Sakkaden ihren anfänglichen und/oder abschließenden Blickfixierungspunkt innerhalb des Teils des Bildschirms hat; und
∘ des Verringerns des Bildzeichenanzeigeschwellenwertes, sodass eine Anzahl von Bildzeichen, die zum Anzeigen des Menüs in natürlicher Spreche auf dem Teil des Bildschirms verwendet werden, erhöht ist, wenn ein gleitender Durchschnitt einer Anzahl der registrierten Sakkaden in der Zeitreihe einen Sättigungswert in der aktuellen Iteration erreicht hat, wobei in der aktuellen Iteration der gleitende Durchschnitt für das letzte verstrichene Zeitintervall der vordefinierten Dauer in der Zeitreihe berechnet wird;
wobei das Menü auf dem entsprechenden Teil des Bildschirms in jeder der Iterationen angezeigt wird, wobei das iterative Wiederholen der Ausführung der Schritte ausgeführt wird, bis das Menü unter Verwendung der Bildzeichen vollständig angezeigt wird oder der in der aktuellen Iteration erreichte Sättigungswert den in der vorhergehenden Iteration erreichten Sättigungswert überschreitet, wobei ein zum Anzeigen mindestens eines der Bildzeichen auf dem Bildschirm genutzter Bildschirmbereich kleiner als ein zum Anzeigen seines entsprechenden Wortes oder seiner Wortkombination genutzter Bildschirmbereich ist, wobei ein zum Anzeigen des Menüs auf dem Teil des Bildschirms in einer der Iterationen genutzter Bildschirmbereich größer als ein zum Anzeigen des Menüs auf dem Teil des Bildschirms in einer weiteren der Iterationen, ausgeführt nach der einen der Iterationen, genutzter Bildschirmbereich ist.

3. Verfahren nach einem der vorangehenden Ansprüche, wobei das Elektroniksystem ein batteriebetriebenes elektronisches, in der Hand gehaltenes System ist und die Eyetrackingkomponente eine Videokamera umfasst, die dazu ausgelegt ist, die Sakkaden der Benutzeraugen des Benutzers zu registrieren, wobei jede der von der Videokamera registrierten Sakkaden ihren anfänglichen und/oder abschließenden Blickfixierungspunkt innerhalb des Teils des Bildschirms hat, wobei das Elektroniksystem dazu ausgelegt ist, Benutzerinteraktionsereignisse des Benutzers mit den im Menü angezeigten Symbolen zu registrieren, wobei das Verfahren umfasst:
• Ausführen von weiterem ausführbarem Code, der im Speicher gespeichert ist, durch den Mikroprozessor in Reaktion auf Registrieren eines Benutzerinteraktionsereignisses mit einem oder mehreren im Menü angezeigten Symbolen.

4. Verfahren nach Anspruch 1 oder 2, umfassend:
• Veranlassen des Elektroniksystems, das Erzeugen von Anzeigewiederholdaten für den Teil des Bildschirms in Reaktion auf das iterative Wiederholen der Ausführung der Schritte (108a) zu begrenzen.

5. Verfahren nach einem der vorangehenden Ansprüche, umfassend:
• Anhalten der iterativen Wiederholung der Ausführung der Schritte in Reaktion auf ein Beenden der Anzeige des Menüs auf dem Teil des Bildschirms der Anzeige (108b); und
• Wiederaufnehmen der iterativen Wiederholung der Ausführung der Schritte in Reaktion auf ein Neustarten der Anzeige des Menüs auf dem Teil des Bildschirms der Anzeige (108c).

6. Verfahren nach einem der vorangehenden Ansprüche 1-4, umfassend:
• Anhalten der iterativen Wiederholung der Ausführung der Schritte in Reaktion auf ein Beenden der Anzeige des Menüs auf dem Teil des Bildschirms der Anzeige (108b); und
• in Reaktion auf das Anhalten der iterativen Wiederholung der Ausführung der Schritte (108d) Speichern des Bildzeichenanzeigeschwellenwertes in einem entfernten Datenspeicher.

7. Verfahren nach Anspruch 6, umfassend ein Verfahren zum Steuern eines weiteren Elektroniksystems (109), umfassend einen weiteren Mikroprozessor (192), eine weitere Eyetrackerkomponente (196), eine weitere Anzeige (195) und einen weiteren Speicher (193), wobei der Speicher weiteren ausführbaren Code umfasst, der von dem weiteren Mikroprozessor ausführbar ist, wobei der weitere ausführbare Code, wenn er durch den weiteren Mikroprozessor ausgeführt wird, das weitere Elektroniksystem veranlasst:
• aus dem entfernten Datenspeicher den Symbolanzeigeschwellenwert, der darin in Reaktion auf das Anhalten der iterativen Wiederholung der Ausführung der Verfahrensschritte von Anspruch 8 gespeichert wurde, zu laden (112); und
• das iterative Wiederholen der Ausführung der Verfahrensschritte von Anspruch 8 auf dem weiteren Elektroniksystem unter Verwendung des geladenen Bildzeichenanzeigeschwellenwertes (114) wieder aufzunehmen.

8. Verfahren nach Anspruch 1 oder 2, umfassend, das Elektroniksystem zu veranlassen, das Folgende auszuführen:
• Ausführen des Verfahrens nach Anspruch 1 oder 2 für jeden Benutzer einer Benutzergruppe, wobei der Bildzeichenanzeigeschwellenwert von Iteration zu Iteration verkleinert wird, sodass Symbolzusammenstellungen der Symbole (303), die als ihre jeweiligen Bildzeichen in den Iterationen (300) angezeigt werden, die die gleiche Reihenfolge in der Abfolge der Iterationen für jeden der Benutzer der Benutzergruppe haben, die gleichen sind, wobei das Ausführen des Verfahrens nach Anspruch 1 oder 2 für jeden Benutzer der Benutzergruppe ein Registrieren von Änderungen in einem oder mehreren Eingabefeldern (13-15) des Menüs, die von jedem Benutzer (116) vorgenommen werden, umfasst;
• Berechnen einer durchschnittlichen Anzahl der Änderungen in dem einen oder mehreren Eingabefeldern je Benutzer für jede von Iterationsgruppen der Iterationen mit der gleichen Reihenfolge in den Abfolgen der Iterationen, wobei jede von den Iterationsgruppen mindestens eine Schwellenanzahl der Iterationen umfasst, wobei die Schwellenanzahl der Iterationen gleich groß wie oder kleiner als eine Anzahl der Benutzer in der Benutzergruppe oder kleiner als eine Anzahl der Benutzer in der Benutzergruppe und größer als null ist (118);
• Erzeugen einer Abfolge von Menüänderungsschritten, wobei jede Iterationsgruppe, für welche die durchschnittliche Anzahl der Änderungen pro Benutzer berechnet wird, den entsprechenden Menüänderungsschritt aufweist, wobei die Abfolge der Menüänderungsschritte die gleiche Reihenfolge wie die Abfolge der in den entsprechenden Iterationsgruppen enthaltenen Iterationen aufweist, wobei jeder der Menüänderungsschritte umfasst, dass ein entsprechender Änderungsschwellenwert gleich der berechneten durchschnittlichen Anzahl der Änderungen je Benutzer für die entsprechende Iterationsgruppe (120) ist; und
• Speichern der Abfolge der Menüänderungsschritte (122) in einem entfernten Datenspeicher.

9. Verfahren nach einem der vorangehenden Ansprüche, wobei das Ranking des Symbols eine ansteigende Funktion einer Summe einer Anzahl ihrer Wiederholungen in dem Menü, multipliziert mit dem ersten Wichtungskoeffizienten, und einer Anzahl von Buchstaben in dem entsprechenden Wort oder der entsprechenden Wortkombination, multipliziert mit einem zweiten Wichtungskoeffizienten, ist.

10. Verfahren nach Anspruch 8, umfassend ein Verfahren zum Steuern eines weiteren Elektroniksystems (190), umfassend einen weiteren Mikroprozessor (192), eine Anzeige (195) und einen weiteren Speicher (193), wobei der Speicher weiteren ausführbaren Code umfasst, der durch den weiteren Mikroprozessor ausführbar ist, wobei der weitere ausführbare Code, wenn er durch den weiteren Mikroprozessor ausgeführt wird, das weitere Elektroniksystem veranlasst:
• aus dem entfernten Datenspeicher die Abfolge der Menüänderungsschritte auf dem weiteren Elektroniksystem (124) zu laden; und
• die Ausführung der folgenden Schritte (126) entsprechend der Abfolge der Menüänderungsschritte iterativ zu wiederholen:
∘ Anzeigen des Menüs auf einem Teil eines Bildschirms der Anzeige des weiteren Elektroniksystems, wobei die Symbole der Symbolzusammenstellung des Menüänderungsschrittes der aktuellen Iteration in dem Menü als ihre entsprechenden Bildzeichen angezeigt werden, wenn die Symbolzusammenstellung des Menüänderungsschrittes der aktuellen Iteration keine leere Zusammenstellung ist (128); und
∘ Registrieren von Änderungen in dem einen oder mehreren Eingabefeldern (13-15) des Menüs, die von einem weiteren Benutzer vorgenommen werden, wobei das Menü auf dem Teil des Bildschirms der Anzeige des weiteren Elektroniksystems (130) angezeigt wird,
wobei die Ausführung der nächsten Iteration gestartet wird, wenn eine Anzahl der registrierten Änderungen, die von dem weiteren Benutzer in dem einen oder mehreren Eingabefeldern des Menüs vorgenommen werden, in der aktuellen Iteration den Änderungsschwellenwert des Menüänderungsschrittes der aktuellen Iteration überschreitet.

11. Verfahren nach einem der vorangehenden Ansprüche, wobei die im Menü angezeigten Symbole entsprechend einer Syntax einer natürlichen Sprache angeordnet sind.

12. Computerlesbares Medium, auf dem ein computerausführbarer Code zur Ausführung durch einen Mikroprozessor, der ein Elektroniksystem steuert, gespeichert ist, wobei die Ausführung des ausführbaren Codes das Elektroniksystem veranlasst, ein Verfahren nach einem der vorangehenden Schritte auszuführen.

13. Elektroniksystem mit einem Speicher, auf dem ein computerausführbarer Code zur Ausführung durch einen Mikroprozessor, der das Elektroniksystem steuert, gespeichert ist, wobei die Ausführung des ausführbaren Codes das Elektroniksystem veranlasst, ein Verfahren nach einem Ansprüche 1-11 auszuführen.

## Revendications

1. Procédé de commande d'un système électronique (190) comprenant un microprocesseur (192), un composant de suivi oculaire (196), un affichage (195) et une mémoire (193), la mémoire comprenant un code exécutable étant exécutable par le microprocesseur, le code exécutable, lorsqu'il est exécuté par le microprocesseur, faisant en sorte que le système électronique effectue les étapes suivantes du procédé :
• l'affichage d'un menu (20A ; 20B ; 20C) sur une partie d'un écran de l'affichage (102), où au moins un symbole étant une représentation de l'information du menu est affiché dans le menu de la partie de l'écran, le symbole étant un mot unique, une combinaison de mots, ou une icône, chacun des au moins un symbole possédant son classement respectif, où, lorsque le classement du symbole est supérieur à une valeur de seuil d'affichage d'icône, il est affiché sous forme de son icône respective ;
• l'enregistrement, en utilisant le composant de suivi oculaire, de saccades des yeux d'utilisateur d'un utilisateur, où chacune des saccades enregistrée a son point de fixation du regard de départ et/ou d'extrémité dans la partie de l'écran (104) ;
• la diminution de la valeur de seuil d'affichage de l'icône de sorte qu'un nombre d'icônes utilisées pour l'affichage du menu sur la partie de l'écran est augmenté lorsqu'un nombre de saccades enregistrées excède une valeur de seuil de nombre de saccades (106) ; et
• l'exécution (108) répétée de manière itérative des étapes :
∘ d'affichage du menu sur une partie de l'écran de l'affichage ;
∘ l'enregistrement, en utilisant le composant de suivi oculaire, de saccades des yeux d'utilisateur d'un utilisateur, où chacune des saccades enregistrée possède son point de fixation du regard de départ et/ou d'extrémité dans la partie de l'écran ; et
∘ la diminution de la valeur de seuil d'affichage de l'icône de sorte qu'un nombre d'icones utilisées pour l'affichage du menu sur la partie de l'écran est augmenté lorsqu'un nombre de saccades enregistrées dans l'itération en cours excède une valeur de seuil de nombre de saccades ;
dans lequel le menu est affiché sur la partie respective de l'écran dans chacune des itérations, où la répétition itérative de l'exécution desdites étapes est exécutée jusqu'à ce que le menu soit totalement affiché sur la partie de l'écran en utilisant les icônes, où une zone d'écran utilisée pour afficher sur l'écran au moins une des icônes est inférieure à une zone d'écran utilisée pour afficher sur l'écran son mot respectif ou sa combinaison de mots, où une zone d'écran utilisée pour l'affichage du menu sur la partie de l'écran dans une des itérations est plus grande qu'une zone d'écran utilisée pour l'affichage du menu sur la partie de l'écran dans une autre parmi les itérations exécutées après l'itération en question parmi les itérations

2. Procédé de commande d'un système électronique (190) comprenant un microprocesseur (192), un composant de suivi oculaire (196), un affichage (195) et une mémoire (193), la mémoire comprenant un code exécutable étant exécutable par le microprocesseur, le code exécutable, lorsqu'il est exécuté par le processeur, faisant en sorte que le système électronique effectue les étapes suivantes du procédé :
• l'affichage d'un menu sur une partie d'un écran de l'affichage (102), où au moins un symbole étant une représentation de l'information du menu est affiché dans le menu de la partie de l'écran, le symbole étant un mot unique, une combinaison de mots, ou une icône, chacun des au moins un symbole possédant son classement respectif, où, lorsque le classement du symbole est supérieur à une valeur de seuil d'affichage d'icône, il est affiché sous forme de son icône respective ;
• l'enregistrement, en utilisant le composant de suivi oculaire, de saccades des yeux d'utilisateur d'un utilisateur, où chacune des saccades enregistrée a son point de fixation du regard de départ et/ou d'extrémité dans la partie de l'écran (104), où l'enregistrement utilisant le composant de suivi oculaire de saccades des yeux d'utilisateur de l'utilisateur comprend :
∘ le démarrage d'une minuterie après l'enregistrement de la première saccade (104c), et
∘ le maintien de la minuterie entre les saccades enregistrées de manière consécutive s'il y en a, en ayant uniquement un point respectif parmi leurs points de fixation du regard de départ ou d'extrémité dans la partie de l'écran, où les saccades enregistrées sont enregistrées sous forme de séries de saccades dans le temps et le temps dans les séries de saccades est enregistré en fonction de la minuterie (104c) ;
• la diminution de la valeur de seuil d'affichage de l'icône de sorte qu'un nombre d'icônes utilisé pour afficher le menu sur la partie de l'écran est augmenté lorsqu'une moyenne glissante des saccades enregistrées dans les séries dans le temps a atteint une valeur de saturation (106), où la moyenne glissante est calculée pour un dernier intervalle de temps (50a, 50b) écoulé d'une durée prédéterminée dans les séries dans le temps ; et
• l'exécution (108) répétée de manière itérative des étapes :
∘ d'affichage du menu sur une partie de l'écran de l'affichage ;
∘ l'enregistrement, en utilisant le composant de suivi oculaire, des saccades des yeux d'utilisateur d'un utilisateur, où chacune des saccades enregistrée possède son point de fixation du regard de départ et/ou d'extrémité dans la partie de l'écran ; et
∘ la diminution de la valeur de seuil d'affichage de l'icône de sorte qu'un nombre d'icônes utilisées pour l'affichage du menu dans la langue maternelle sur la partie de l'écran est augmenté lorsqu'un nombre de saccades enregistrées dans les séries dans le temps a atteint une valeur de saturation dans l'itération en cours, où, dans l'itération en cours, la moyenne glissante est calculée pour le dernier intervalle de temps écoulé dans la durée prédéfinie des séries dans le temps ;
dans lequel le menu est affiché sur la partie respective de l'écran dans chacune des itérations, où la répétition itérative de l'exécution desdites étapes est exécutée jusqu'à ce que le menu soit totalement affiché en utilisant les icônes ou que la valeur de saturation atteinte dans l'itération en cours dépasse la valeur de saturation atteinte dans l'itération précédente, où une zone d'écran utilisée pour afficher sur l'écran au moins une des icônes est inférieure à une zone d'écran utilisée pour afficher sur l'écran son mot respectif ou sa combinaison de mots, où une zone d'écran utilisée pour l'affichage du menu sur la partie de l'écran dans une des itérations est plus grande qu'une zone d'écran utilisée pour l'affichage du menu sur la partie de l'écran dans une autre parmi les itérations exécutées après l'itération en question parmi les itérations.

3. Procédé selon l'une quelconque des revendications précédentes, dans lequel le système électronique est un système électronique alimenté par batterie portable manuellement et le composant de suivi oculaire comprend une caméra vidéo conçue pour enregistrer les saccades des yeux d'utilisateur de l'utilisateur, où chacune des saccades enregistrées par la caméra vidéo a son point de fixation de regard de départ et/ou d'extrémité dans la partie de l'écran, où le système électronique est conçu pour enregistrer les événements d'interaction avec l'utilisateur de l'utilisateur avec les symboles affichés sur le menu, le procédé comprenant :
• l'exécution d'un autre code exécutable stocké dans la mémoire par le microprocesseur en réponse à l'enregistrement d'un événement d'interaction avec un utilisateur avec un ou plusieurs symboles affichés sur le menu.

4. Procédé selon la revendication 1 ou la revendication 2, comprenant :
• le fait de faire en sorte que le système électronique limite la génération de données de rafraichissement d'affichage pour la partie de l'écran en réponse à la répétition itérative de l'exécution desdites étapes (108a).

5. Procédé selon l'une quelconque des revendications précédentes, comprenant :
• le maintien de la répétition itérative de l'exécution desdites étapes en réponse à une interruption de l'affichage du menu sur la partie de l'écran de l'affichage (108b) ; et
• le résumé de la répétition itérative de l'exécution desdites étapes en réponse au redémarrage de l'affichage du menu sur la partie de l'écran de l'affichage (108c).

6. Procédé selon l'une quelconque des revendications 1 à 4, comprenant :
• le maintien de la répétition itérative de l'exécution desdites étapes en réponse à une interruption de l'affichage du menu sur la partie de l'écran de l'affichage (108b) ; et
• le stockage de la valeur de seuil d'affichage d'icône sur un stockage de données à distance en réponse au maintien de la répétition itérative de l'exécution desdites étapes (108d).

7. Procédé selon la revendication 6, comprenant un procédé pour commander un autre système électronique (109) comprenant un autre microprocesseur (192), un autre composant de suivi oculaire (196), un autre affichage (195) et une autre mémoire (193), la mémoire comprenant un autre code exécutable étant exécutable par l'autre microprocesseur, l'autre code exécutable, lorsqu'il est exécuté par l'autre microprocesseur, faisant en sorte que le système électronique :
• charge à partir du stockage de données à distance la valeur de seuil d'affichage d'icône qui y était stockée en réponse au maintien de la répétition itérative de l'exécution des étapes de procédé selon la revendication 8 (112) ; et
• résume la répétition itérative de l'exécution des étapes de procédé selon la revendication 8 sur l'autre système électronique en utilisant la valeur de seuil d'affichage d'icône (114) chargée.

8. Procédé selon la revendication 1 ou la revendication 2, comprenant le fait de faire en sorte que le système électronique exécute ce qui suit :
• l'exécution du procédé selon la revendication 1 ou la revendication 2 pour chaque utilisateur d'un groupe d'utilisateurs, où la valeur de seuil d'affichage d'icône est diminuée d'une itération à une autre itération de sorte que des ensembles de symboles des symboles (303) affichés sous forme de leurs icônes respectives dans les itérations (300) ayant le même ordre dans des séquences d'itérations pour chacun des utilisateurs du groupe d'utilisateurs sont les mêmes, où l'exécution du procédé selon la revendication 1 ou la revendication 2 pour chaque utilisateur du groupe d'utilisateurs comprend l'enregistrement de variations dans un ou plusieurs champs d'entrée (13 à 15) du menu qui sont faites par chaque utilisateur (116) ;
• le calcul d'un nombre moyen de variations dans le ou les champs d'entrée par utilisateur pour chacun des groupes d'itération des itérations ayant le même classement dans les séquences d'itérations, où chacun des groupes d'itération comprend au moins un nombre limite d'itérations, le nombre limite d'itérations étant inférieur ou égal à un nombre d'utilisateurs dans le groupe d'utilisateurs et supérieur à zéro (118) ;
• la génération d'une séquence d'étapes de variations de menu, où chaque groupe d'itération pour lequel le nombre moyen des variations par utilisateur est calculé a une étape de variation de menu respective, où la séquence des étapes de variation de menu a le même ordre que la séquence des itérations comprise dans les groupes d'itérations respectives, où chacune des étapes de variation de menu comprend l'ensemble de symboles étant le même que dans l'itération du groupe d'itération respectif, où chacune des étapes de variation de menu comprend une valeur de seuil de variations respective étant égale au nombre moyen calculé de variations par utilisateur pour le groupe d'itération (120) respectif ; et
• le stockage sur un stockage de données à distance de la séquence d'étapes de variations de menu (122).

9. Procédé selon l'une quelconque des revendications précédentes, dans lequel le classement du symbole est une fonction croissante d'une somme d'un nombre de ses répétitions dans le menu multiplié par le premier coefficient pondéral et un nombre de lettres dans le mot respectif ou la combinaison de mots respective multiplié par un second coefficient pondéral.

10. Procédé selon la revendication 8, comprenant un procédé pour commander un autre système électronique (190) comprenant un autre microprocesseur (192), un affichage (195) et une autre mémoire (193), la mémoire comprenant un autre code exécutable étant exécutable par l'autre microprocesseur, l'autre code exécutable, lorsqu'il est exécuté par l'autre microprocesseur, faisant en sorte que le système électronique :
• charge à partir du stockage de données à distance la séquence des étapes de variation de menu sur l'autre système électronique (124) ; et
• répète de manière itérative l'exécution des étapes suivantes (126) selon la séquence d'étapes de variation de menu :
∘ l'affichage du menu sur une partie d'un écran de l'affichage de l'autre système électronique, où les symboles de l'ensemble de symboles de l'étape de variation de menu de l'itération en cours sont affichés dans le menu sous forme de leurs icônes respectives si l'ensemble de symboles de l'étape de variation de menu de l'itération en cours n'est pas un ensemble vide (128) ; et
∘ l'enregistrement des variations dans le ou les champs d'entrée (13 à 15) du menu qui sont faits par un autre utilisateur, où le menu est affiché dans la partie de l'écran de l'affichage de l'autre système électronique (130),
dans lequel l'exécution de l'itération suivante est commencée lorsqu'un nombre de variations enregistrées faites par l'autre utilisateur dans le ou les champs d'entrée du menu dans l'itération en cours dépasse la valeur limite de variations de l'étape de variation de menu dans l'itération en cours.

11. Procédé selon l'une quelconque des revendications précédentes, dans lequel les symboles affichés dans le menu sont agencés en accord avec une syntaxe d'une langue maternelle.

12. Support lisible par ordinateur ayant un code exécutable par ordinateur y étant stocké pour l'exécution par un microprocesseur commandant un système électronique, où l'exécution du code exécutable fait en sorte que le système électronique exécute un procédé selon l'une quelconque des revendications précédentes.

13. Système électronique ayant une mémoire stockant un code exécutable par ordinateur pour l'exécution par un microprocesseur commandant le système électronique, où l'exécution du code exécutable fait en sorte que le système électronique exécute un procédé selon l'une quelconque des revendications 1 à 11.
